Europäisches Patentamt

European Patent Office

Office européen des brevets

(11) Veröffentlichungsnummer: **0 050 371**
A1

## (12) EUROPÄISCHE PATENTANMELDUNG

(21) Anmeldenummer: **81108612.3**

(22) Anmeldetag: **21.10.81**

(51) Int. Cl.³: **B 09 B 1/00,** C 04 B 31/00,
C 02 F 11/00

(30) Priorität: **21.10.80 DE 3039660**
**26.11.80 DE 3044436**

(43) Veröffentlichungstag der Anmeldung: **28.04.82**
**Patentblatt 82/17**

(84) Benannte Vertragsstaaten: **AT BE DE FR GB IT LU NL
SE**

(71) Anmelder: **METALLGESELLSCHAFT AG,**
**Reuterweg 14 Postfach 3724, D-6000 Frankfurt/M.1 (DE)**

(72) Erfinder: **Heide, Günther, Dr., Feldburgweg 36 a,
D-4154 Tönisvorst 1 (DE)**
Erfinder: **Werner, Hans, Dr., Hochbendweg 4 c,
D-4150 Krefeld (DE)**

(74) Vertreter: **Fischer, Ernst, Dr., Reuterweg 14,
D-6000 Frankfurt am Main 1 (DE)**

(54) **Verfahren zum schadlosen Deponieren von Abfallstoffen.**

㊙ In einem Verfahren zum schadlosen Deponieren von festen oder in wässrigen Medien enthaltenen Abfallstoffen, wobei der Abfallstoff mit alkalisch reagierenden Stoffen behandelt und ein festes Produkt gewonnen wird, werden gemäss der Erfindung die festen oder in wässrigen Medien gelösten oder suspendierten Abfallstoffe mit Braunkohlenasche, gegebenenfalls unter Zusatz von Wasser zur Erzielung von breiartiger bis fliessfähiger Konsistenz, homogen gemischt und die Mengenverhältnisse mit der Massgabe eingestellt, dass das Mischungsprodukt zu einer praktisch wasserundurchlässigen Masse erhärtet.

Die Massen dienen sowohl der Einbindung von Abfallstoffen, beispielsweise Dünnsäuren, als auch werden sie zum Abdichten von oberirdischen und unterirdischen Deponien verwendet.

Verfahren zum schadlosen Deponieren von Abfallstoffen

Die Erfindung betrifft ein Verfahren zum schadlosen Deponieren von festen oder in wäßrigen Medien gelösten Abfallstoffen unter Verwendung von Braunkohlenasche.

Es ist bekannt, staubfeine oder schlammförmige Rückstände,
die Metallverbindungen enthalten, mit z. B. gebranntem Kalk
unter Agglomeration zu behandeln und in ein festes, auf Halden ablagerbares granuliertes Produkt überzuführen (DE - AS
26 52 107). Die vorbekannten granulierten und auf Halde gegebenen Produkte vermögen aufgrund ihrer großen Oberfläche
und Restporosität sowie ihrer lockeren Schüttung nicht das
Auswaschen der darin enthaltenen Schadstoffe zu verhindern.
Nach einem weiteren bekannten Verfahren hat man auch schon
viskose, reaktionsfähige chlor- und schwefelhaltige Produktionsrückstände, die bei der Herstellung von Pflanzenschutzmitteln anfallen, mit alkalisch reagierenden pulverförmigen
Stoffen vermischt und nach Zusatz von Wasser in feste rieselförmige Produkte übergeführt. Im vorbekannten Verfahren wird
Braunkohlenasche nicht eingesetzt (DE - AS 26 38 224).
Nach dem aus DE - AS 29 25 882 bekannten Verfahren wird sulfathaltige Braunkohlenasche vor ihrer Verkippung durch Wasserzusatz in eine breiartige Masse umgewandelt, die nach dem
Verkippen erhärtet. In die Mischung des vorbekannten Verfahrens werden zusätzliche Abfallstoffe nicht eingeführt.

Der Erfindung liegt die Aufgabe zugrunde, toxische Abfallstoffe bzw. Produktionsrückstände, die in fester Form oder
in wäßrigen Medien gelöst oder aufgeschlämmt sein können, auf möglichst einfache und wirtschaftliche Weise in feste,
deponierfähige Produkte zu überführen.

Zur Lösung dieser Aufgabe geht die Erfindung aus von einem
Verfahren zum schadlosen Deponieren von festen oder in wäßrigen Medien enthaltenen Abfallstoffen, wobei der Abfallstoff mit alkalisch reagierenden Stoffen behandelt und ein
festes Produkt gewonnen wird. Bei einem Verfahren der genannten Art besteht die Erfindung darin, daß die festen
oder in wäßrigen Medien gelösten oder suspendierten Abfallstoffe mit Braunkohlenasche, gegebenenfalls unter Zusatz
von Wasser zur Erzielung von breiartiger bis fließfähiger
Konsistenz, homogen gemischt werden und die Mengenverhältnisse mit der Maßgabe eingestellt werden, daß das Mischungsprodukt zu einer praktisch wasserundurchlässigen Masse erhärtet.

In dem erfindungsgemäßen Verfahren wird als alkalisch reagierender Stoff Braunkohlen-Kraftwerksasche verwendet, die
in großen Mengen anfällt und ebenfalls Probleme beim Deponieren bereitet, weil ihre Sulfatbestandteile in unzulässig
großer Menge ins Grundwasser gelangen.

Für das erfindungsgemäße Verfahren eignet sich sowohl staubförmige, unbefeuchtete Asche, wie sie in den Bunkern der
Kraftwerke anfällt, als auch angefeuchtete Kraftwerksasche,
wie sie z. B. in den Tagebauen von Braunkohlenrevieren zur
Verkippung gelangt.

Diese Kraftwerksasche setzt sich zusammen aus der mineralischen Substanz der reinen Kohle und aus den beim Abbau der
Kohle mitgeförderten Sand- und Ton-Beimengungen. Der größte
Teil dieser Asche besteht aus sehr feinkörniger Elektrofilterasche, der kleinere aus grobkörniger, sandreicher Kesselasche.

Für das chemische und physikalische Verhalten der Braunkohle-Kraftwerksasche ist ihr Gehalt an Calcium von entscheidender Bedeutung. Es liegt vor als Calciumoxid, -ferrit und -sulfat. Die hohe Reaktionsfähigkeit wird durch die Feinkörnigkeit der Asche und ihre große innere Oberfläche noch verstärkt.

In dem erfindungsgemäßen Verfahren können die unterschiedlichsten Abfallstoffe eingebunden und der Umweltbelastung entzogen werden. Diese Abfallstoffe können als feste Stoffe vorliegen, als wäßrige Suspensionen oder Schlämme, oder als wäßrige Lösungen. Derartige Abfallstoffe sind beispielsweise mit Katalysatorgiften, wie löslichen Arsenverbindungen angereicherte feste Eisenoxid-Katalysatoren, ferner Filterstäube aus Gießereien und Hüttenbetrieben, Schlacken und Röstrückstände, Gichtgas- und Galvanikschlämme sowie andere Abfälle, die wasserlösliche Schwermetallverbindungen oder andere Schadstoffe enthalten. In der Regel können der Braunkohlenasche ohne Beeinträchtigung ihres Abbindeverhaltens, bis zu 50 Gew.-% Festsubstanz beigemischt werden. Feste Abfallstoffe liegen im allgemeinen in pulvriger oder körniger, gelegentlich auch in stückiger Form vor und werden zweckmäßig trocken mit der Braunkohlen-Kraftwerksasche homogen gemischt und anschließend der erforderliche Wasseranteil zugegeben. Dieser beträgt im allgemeinen 20 bis 40 Gew.-% bezogen auf Braunkohlenasche. Weitere, in dem erfindungsgemäßen Verfahren in vorteilhafter Weise einbindbare Abfallstoffe sind Abfallsäuren, die bei vielen chemischen Prozessen anfallen, z. B. bei der Erzlaugung und Metallbeizung mit schwefelsauren Lösungen oder bei der Herstellung organischer Farbpigmente. Diese Abfallsäuren haben eine relativ geringe Säurekonzentration und enthalten mehr oder weniger Verunreinigungen in Form von Salzen.

Nach einer bevorzugten Ausführungsform des erfindungsgemäßen Verfahrens wird als Abfallstoff Dünnsäure eingebunden, die bei dem Aufschluß titanhaltiger Erze zur Herstellung von Titandioxid-Pigmenten anfällt. Zur Erzielung eines festen, kompakten und praktisch wasserundurchlässigen Endprodukts
ist es erforderlich, die Dünnsäure mit Braunkohlen-Kraftwerksasche in einem bestimmten Gewichtsverhältnis homogen zu
mischen und bis zur Erzielung breiartiger Konsistenz zu rühren. Bei einem mittleren CaO-Gehalt der Braunkohlenasche von
etwa 10 Gew.-% und einer $H_2SO_4$-Konzentration der Dünnsäure
von durchschnittlich etwa 12 % hat sich ein Mischungsverhältnis von 100 Gewichtsteilen Asche zu 50 bis 75, vorzugsweise 60 bis 65 Gewichtsteilen Dünnsäure als vorteilhaft erwiesen. Niedrigere CaO-Gehalte der Asche bzw. höhere Säure-
oder Eisensulfat-Konzentrationen der Dünnsäure machen eine
Verdünnung mit Wasser erforderlich, da in jedem Fall eine
breiartige Konsistenz des Gemisches entstehen muß.

Das aus Braunkohlenasche und Dünnsäure entstehende breiartige Gemisch, das durch mechanische Einwirkung, (z.B. Rütteln,
Befahren mit Raupen oder Walzen) noch weiter verdichtet werden kann, zementiert nach kurzer Zeit infolge der chemischen
Umsetzungen, die unter Erwärmung vor sich gehen.

Zur Bindung der in der Dünnsäure enthaltenen Schwermetallsalze wird die Mischung so zusammengesetzt, daß sie basische
Reaktion zeigt und sich zu einer kompakten Masse verfestigt.
Ein Herauslösen der Schwermetallsalze wird dadurch praktisch
verhindert, so daß eine Gefährdung des Grundwassers ausgeschlossen werden kann.

Durch die Erfindung werden Probleme der gemeinsamen Beseitigung von mehreren Abfallstoffen gelöst, indem das schadlose
Deponieren nicht nur von z. B. Abfallsäuren wie Dünnsäure,
sondern auch von Braunkohlen-Kraftwerksasche in einem gemeinsamen Verfahrensschritt ermöglicht wird. Aufgrund der erzielten praktischen Wasserundurchlässigkeit der festgewordenen
kompakten Mischung aus Braunkohlen-Kraftwerksasche und Dünnsäure können die Sulfate der Braunkohlenasche von Regen-
oder Grundwasser nicht mehr herausgelöst werden. Die in der
Dünnsäure enthaltenen Schwermetalle sind in dem festen, kompakten Produkt entweder gefällt oder sorbiert nicht auswaschbar eingeschlossen.

Bei der Vermischung von z. B. Dünnsäure und Braunkohlen
Kraftwerksasche, d.h. von zwei grundsätzlich verschiedenen
und für die Deponie nicht geeigneten Abfallstoffen, entsteht
somit durch das erfindungsgemäße Verfahren ein einziges festes Deponieprodukt, das aufgrund seiner dichten und kompakten Beschaffenheit für Wasser nicht mehr durchlässig und für
eine Ablagerung auf geordneten Deponien besonders geeignet
ist.

Eine bisher übliche chemische Weiterbehandlung der Dünnsäure,
die mit hohen Investitionskosten, erheblichem Energieaufwand
und speziellen Maßnahmen für die Beseitigung des entstehenden
Sondermülls verbunden ist, wird durch das erfindungsgemäße
Verfahren entbehrlich. Das Entladen der Dünnsäure auf offener
See (sogenanntes Verklappen) als ebenfalls bisher angewendete
Problemlösung, wird in Zukunft aus Gründen des verstärkten
Umweltschutzes sich gleichfalls verbieten, so daß mit dem erfindungsgemäßen Verfahren ein ebenso einfacher wie wirtschaftlicher Weg in unerwarteter Weise zur Verfügung steht.

Die großtechnische Anwendung kann dadurch erfolgen, daß die
Braunkohlen-Kraftwerksasche über Fördereinrichtungen und die
Dünnsäure über Rohrleitungen getrennt herantransportiert werden. Diese beiden Komponenten werden in einer Mischanlage in
den erforderlichen Mengen unmittelbar vor Ort zusammengeführt,
das heißt der Deponierung des hier entstehenden inerten kompakten Produkts. Zufuhr, Vermischung und Austragen können kontinuierlich erfolgen. Die Mischanlage kann vorteilhaft auf
einem verfahrbaren Absetzer angebracht werden.

Nach einer weiteren Ausgestaltung der Erfindung kann die Mischung des erfindungsgemäßen Verfahrens zum Abdichten von
Abfalldeponien eingesetzt werden. Üblicherweise hat man bis-

0050371

her Abfallstoffe, bei deren Ablagerung eine ausgesprochene Gefährdung des Grundwassers im Bereich der Deponie zu befürchten ist, entweder mit reinem Ton entsprechend abgedichtet oder in ausgebeuteten Tongruben, bei denen an der Basis und an den Seitenflächen noch mehrere Meter Ton in natürlicher Lagerung ansteht, deponiert. Aus Mangel an Ton bzw. an aufgelassenen Tongruben ist man weitgehend auch zur Verwendung von verschweißten Kunststoff-Folien als Auskleidungsmaterial übergegangen. Derartige Arbeitsweisen werden durch das erfindungsgemäße Verfahren erübrigt.

Abfalldeponien werden auf der Sohle und an den Flanken in der erforderlichen Mächtigkeit gemäß dem erfindungsgemäßen Verfahren so wirkungsvoll abgedichtet, daß ein Eindringen von mit Schadstoffen belasteten Sickerwässern in den Untergrund verhindert wird. Eine Beeinträchtigung des Grundwassers wird somit praktisch ausgeschlossen. Die auf der Basis der Deponien anfallenden Wässer können durch Dränagen gesammelt und schadlos abgeführt werden.

Falls erforderlich, kann auch die Oberfläche der Deponie mit dem Material nach dem erfindungsgemäßen Verfahren abgedichtet werden, um das Eindringen von Niederschlagswässern in die Deponie zu verhindern.

Im Tiefbau und Wasserbau können Zuflüsse von Grundwässern und/oder Oberflächenwässern abgedämmt werden. So können z.B. Baugruben, Straßeneinschnitte, Kanalbauten usw. gegen zuströmendes Wasser geschützt werden.

Die Mächtigkeit der für die verschiedenen Anwendungsgebiete einzubringenden Dämmschicht sowie die Stärke und Anzahl der einzelnen Lagen sind abhängig von der Art der zu deponierenden Abfallstoffe bzw. von den erforderlichen Abdämmungsmaßnahmen und von den örtlichen hydrologischen Gegebenheiten.

Die Mischung des erfindungsgemäßen Verfahrens wird ferner
vorteilhaft zum Verfüllen von unterirdischen natürlichen
oder bergmännisch geschaffenen Hohlräumen eingesetzt. Hierbei hat es sich als zweckmäßig erwiesen, der Mischung aus
Braunkohlen-Kraftwerksasche und Abfallstoff einen Wasseranteil in solcher Menge und zu einem solchen Zeitpunkt zuzufügen, daß die erhaltene Mischung für den Transport vor Ort,
also am Einsatzort, fließfähig ist. Mit einer solchen höheren Wasserzugabe, die über die breiartige Konsistenz hinaus
zu einem fließfähigen Gemisch führt, kann die Abdichtung
bzw. die Abdämmung gegen Wasserzuflüsse im Spülverfahren
vorgenommen werden, wobei ebenfalls die verfestigte, kompakte und dichte Masse praktisch wasserundurchlässig ist.

Bei unterirdischen Deponien, in denen in Behälter verpackte Schadstoffe gelagert werden, wie nukleare oder chemische
Abfälle, kann gemäß dem erfindungsgemäßen Verfahren eine
Verfüllung und Abdichtung der verbliebenen Hohlräume vorgenommen und ein zusätzlicher Schutz gewährleistet werden.

Im Bergbau kann das erfindungsgemäße Verfahren z.B. bei
Versatzarbeiten untertage angewendet werden, indem das Bergematerial dem fließfähigen Gemisch aus Braunkohlen-Kraftwerksasche und Wasser beigemengt wird. Dabei werden die beim
Einbringen des Bergematerials sonst verbleibenden Hohlräume
weitgehend ausgefüllt, so daß der Setzungsbetrag entscheidend verringert werden kann und damit auch die an der Oberfläche eintretenden Bergsenkungen.

Auf die gleiche Weise können Abschnitte stillgelegter Strecken
verfüllt werden, um eine Abdämmung gegen zufließende Wässer zu
erzielen. Die Sümpfungsmaßnahmen für die in Betrieb befindlichen Strecken können dadurch wesentlich reduziert werden.

Auch die für die Aufbringung von Bergematerial vorgesehenen
Standorte, sei es an der Oberfläche oder in aufgelassenen Gruben, können nach dem erfindungsgemäßen Verfahren in wirtschaftlicher Weise abgedichtet werden. Hierdurch wird verhindert, daß die bei der Verwitterung der Berge entstehenden Sulfate, Chloride und andere Schadstoffe in das Grundwasser gelangen. Durch die Verlegung von Dränagen an der Oberfläche der verdichteten, nach dem erfindungsgemäßen Verfahren erzeugten Schicht können die anfallenden belasteten Sickerwässer abgeführt und schadlos beseitigt werden.

In klüftigem Gestein, z. B. in Kalksteinbrüchen, ist es gleichfalls zweckmäßig, das nach dem erfindungsgemäßen Verfahren hergestellte Gemisch in fließfähiger Form einzubringen, um eine möglichst tiefreichende Verfüllung von Spalten, Klüften und Schichtfugen zu bewirken. Die hierdurch zu erzielende vollständige Abdichtung kann mit den bisher in der Abfallwirtschaft eingesetzten Methoden nicht erreicht werden. Mit dem erfindungsgemäßen Verfahren können somit auch stillgelegte Steinbrüche kostengünstig für das schadlose Deponieren von Abfallstoffen nutzbar gemacht werden.

Die Vorteile der Erfindung sind darin zu sehen, daß mittels des erfindungsgemäßen Verfahrens Abfallstoffe, die insbesondere die Wasserwirtschaft umweltschädlich belasten, in eine kompakt verfestigte, praktisch wasserundurchlässige Masse übergeführt werden. Aus dieser Masse sind die darin enthaltenen Schadstoffe, wie Schwermetalle, mit Wasser nicht mehr eluierbar, so daß diese Masse auf jeder geordneten Deponie abgelagert werden kann. Darüberhinaus können mit solchen Massen Deponien gegen Grund- und Oberflächenwasser unbedenklich abgedichtet werden. Die Deponien können schließlich mit natürlichem Bodenmaterial überdeckt werden, so daß die neu gewonnenen Flächen für jede beliebige Nutzung wieder zur Verfügung stehen.

Die Erfindung wird anhand der nachstehenden Beispiele näher und beispielhaft erläutert.

Beispiel 1

A)

a) Es wurden Gemische aus Braunkohlen-Kraftwerksasche und
   12 %-iger Dünnsäure im Verhältnis von 100 zu 60 bis
   65 Gew.-Teilen hergestellt.

b) Es wurden ferner Gemische aus Braunkohlen-Kraftwerksasche und 15 bis 20 % $H_2SO_4$ enthaltender, bei der Herstellung organischer Farbpigmente anfallender Dünnsäure im Verhältnis von 100 zu 70 Gew.-Teilen hergestellt.

Die unter a) und b) hergestellten Gemische wurden in 100
ml-Stahlzylinder, deren Unterseite durch Plastikkappen
verschlossen waren, eingefüllt und durch Rütteln verdichtet. Nach einigen Tagen wurden die Proben (in der $K_f$-Apparatur nach K. E. Wit; Differenzdruck etwa 10 mm Wassersäule) auf ihre Wasserdurchlässigkeit untersucht.
Die Ergebnisse sind in Tabelle 1 enthalten.

0050371

Tab. 1: Wasserdurchlässigkeit ($K_f$ in m/s)
von Probekörpern aus Braunkohlenasche und
Dünnsäure

a) aus der Titandioxidproduktion

im Gewichtsverhältnis

| 100 : 60 | 100 : 65 |
|---|---|
| $5.4 \cdot 10^{-8}$ | $9.1 \cdot 10^{-8}$ |
| $9.3 \cdot 10^{-8}$ | $7.2 \cdot 10^{-8}$ |
| $4.6 \cdot 10^{-8}$ | $2.5 \cdot 10^{-8}$ |
| $3.9 \cdot 10^{-8}$ | $4.9 \cdot 10^{-8}$ |
| $3.2 \cdot 10^{-8}$ | $4.5 \cdot 10^{-8}$ |
| $2.3 \cdot 10^{-8}$ | $4.4 \cdot 10^{-8}$ |
| $2.8 \cdot 10^{-8}$ | $2.5 \cdot 10^{-8}$ |
| $1.6 \cdot 10^{-8}$ | $1.6 \cdot 10^{-8}$ |

b) aus der Produktion organischer Farbpigmente

im Gewichtsverhältnis 100 : 70

$$3.6 \cdot 10^{-8}$$
$$1.8 \cdot 10^{-8}$$
$$7.9 \cdot 10^{-8}$$
$$8.5 \cdot 10^{-8}$$
$$8.2 \cdot 10^{-8}$$
$$1.4 \cdot 10^{-8}$$
$$7.2 \cdot 10^{-8}$$

B) Zur Ermittlung der aus dem erfindungsgemäß hergestellten Produkt eluierbaren Stoffe, insbesondere im Hinblick auf die in der Dünnsäure enthaltenen Schwermetalle wurden Auslaugungsversuche nach derzeit gültigen Richtlinien durchgeführt. Dazu wurden 300 g schwere Probekörper mit der 10-fachen Menge destillierten Wassers 24 Stunden lang unter ständiger Wasserumwälzung behandelt. Der eingedampfte Rückstand des klaren Filtrats wurde anschließend analysiert. Das Ergebnis ist in Tabelle 2 angeführt. Demgemäß liegen die mit Röntgen-Fluoreszenz-Analyse ermittelten Konzentrationen für alle untersuchten Schwermetalle unterhalb der selbst für Trinkwasser zulässigen Werte. Es ist besonders darauf hinzuweisen, daß die Eluate der nach dem erfindungsgemäßen Verfahren im Hinblick auf die Umweltbelastung unschädlich gemachten Dünnsäure sowohl aus der Titandioxidproduktion als auch aus der Farbstoffproduktion keine wesentlichen Unterschiede aufweisen.

Die in der Dünnsäure aus der Farbstoffproduktion als besonders problematisch erachteten organischen Bestandteile (s. Tab. 2) werden ebenfalls weitgehend gebunden. Während die Dünnsäure 1 % (10 000 ppm) Benzol-, Naphthalin- und Anthrachinon-Sulfonsäuren sowie 10 ppm Organohalogene enthält, fanden sich im Eluat der Probekörper aus Asche und Dünnsäure nur noch 11 ppm DOC (diluted organic carbon) und < 0,06 ppm EOCL (extractable organic chlorine).

0050371

Tab. 2: Eluierung von Probekörpern aus Braunkohlenasche
und Dünnsäure

a) aus der Titandioxidproduktion

| | |
|---|---|
| Vanadium | < 0,03 ppm |
| Chrom | < 0,03 ppm |
| Nickel | < 0,03 ppm |
| Kupfer | < 0,03 ppm |
| Zink | < 0,03 ppm |
| Blei | < 0,03 ppm |

b) aus der Farbstoffproduktion

| | |
|---|---|
| Vanadium | < 0,04 ppm |
| Chrom | 0,04 ppm |
| Nickel | < 0,04 ppm |
| Kupfer | < 0,04 ppm |
| Zink | 0,05 ppm |
| Blei | < 0,04 ppm |
| Arsen | < 0,04 ppm |

DOC                      11,0   ppm
(diluted organic carbon)

EOCL                     < 0,06 ppm
(extractable organic chlorine)

Tab. 3: Durchschnittsanalyse von Dünnsäuren
aus der Farbstoffproduktion

| | |
|---|---|
| $H_2SO_4$ | 15 - 20 % |
| Benzol-, Naphthalin- und Anthrachinon-Sulfonsäuren | 1 % |
| Fe | 100 ppm |
| Cr | 20 ppm |
| Cu, Zn | 1 - 10 ppm |
| Ni, V, Pb, Hg | 0,1 - 1 ppm |
| As, Cd, Ag | < 0,1 ppm |
| Organohalogene | 10 ppm |

Tab. 4: Durchschnittsanalysen von Dünnsäuren verschiedener
Provenienz aus dem Aufschluß von Ilmenit
(a,b) bzw. Sorel-Schlacke (c)

| | (a) | (b) | (c) |
|---|---|---|---|
| pH-Wert | unter 1 | unter 1 | unter 1 |
| $CS^B$ | ca. 7 g $O_2$/1 | ca. 9 g $O_2$/1 | ca. 5 g $O_2$/1 |
| $H_2SO_4$, frei | ca. 12 % | ca. 12 % | ca. 23 % |
| $TiOSO_4$ | ca. 1,0 % | ca. 0,8 % | nicht genannt |
| $MgSO_4$ | ca. 2,0 % | ca. 1,0 % | " " |
| $MnSO_4$ | ca. 0,1 % | ca. 0,07 % | " " |
| $Al_2(SO_4)_3$ | nicht genannt | max. 0,2 % | " " |
| $Na_2SO_4$ | " " | max. 0,03 % | " " |
| $CaSO_4$ | " " | max. 0,07 % | " " |
| Eisen | max. 50.000 mg/l | ca. 65.000 mg/l | max. 2,1 % |
| Vanadium | max. 350 " | ca. 110 " | max. 0,05 % |
| Chrom | max. 200 " | max. 200 " | max. 0,03 % |
| Zink | max. 20 " | max. 40 " | max.80 mg/l |
| Blei | max. 2 " | max. 2 " | max.10 " |
| Nickel | nicht genannt | ca. 15 " | max. 3 " |
| Kupfer | max.$_+$ 1,5mg/l | max.$_+$ 1,5" | max. 2 " |
| Cadmium | n.n.$_{++}$ | n.n.$_{++}$ | max. 0,2 " |
| Quecksilber | n.n.$_{+++}$ | n.n.$_{+++}$ | max. 0,03 " |
| Arsen | n.n. | n.n. | n.n. |

n.n.  nicht nachweisbar oberhalb der Nachweisgrenzen:

+)     Nachweisgrenze 0,1 mg/l

++)    Nachweisgrenze 0,01 "

+++)   Nachweisgrenze 0,1  "

## Beispiel 2

Dieses Beispiel veranschaulicht die Einbindung eines festen Abfallstoffs in ein Braunkohlenasche/-Wasser-Gemisch. Als fester Abfallstoff wird ein verbrauchter Eisenoxid-Katalysator verwendet, wie er in der petrochemischen Industrie anfällt. Ein solcher verbrauchter Katalysator hat einen so hohen Anteil an wasserlöslichem Arsen, daß er nur auf einer Deponie für Sondermüll abgelagert werden darf. Der ve....ndete Katalysator bestand aus bis zu Zentimeter großen Preßlingen. Ein Eluierungsversuch, bei dem dieses Material im Verhältnis 1 : 10 mit destilliertem Wasser unter ständiger Umwälzung 24 Stunden lang behandelt wurde, ergab im Filtrat einen Arsen-Gehalt von 1,3 mg/l.

Ein Gemisch aus 30 Gew.-Teilen Abfall-Katalysator, 100 Gew.-Teilen Braunkohlenasche und 20 bis 40 Gew.-Teilen Wasser ergab einen kompakten dichten, außergewöhnlich harten Probekörper, für den ein Wert für die Wasserdurchlässigkeit $K_f$ von $9 \cdot 10^{-10}$ m/s ermittelt wurde. Ein entsprechend angesetzter Eluierungsversuch ergab einen Arsengehalt, der unterhalb der Nachweisgrenze von 0,03 mg/l liegt und somit auch unter dem für Trinkwasser zulässigen Grenzwert von 0,05mg/l.

0050371

Patentansprüche

1) Verfahren zum schadlosen Deponieren von festen oder in
   wäßrigen Medien enthaltenen Abfallstoffen, wobei der Abfallstoff mit alkalisch reagierenden Stoffen behandelt
   und ein festes Produkt gewonnen wird, dadurch gekennzeichnet, daß die festen oder in wäßrigen Medien gelösten oder suspendierten Abfallstoffe mit Braunkohlenasche, gegebenenfalls unter Zusatz von Wasser zur Erzielung von breiartiger bis fließfähiger Konsistenz, homogen gemischt werden und die Mengenverhältnisse mit der
   Maßgabe eingestellt werden, daß das Mischungsprodukt zu
   einer praktisch wasserundurchlässigen Masse erhärtet.

2) Verfahren nach Anspruch 1, dadurch gekennzeichnet, daß
   basische Braunkohlen-Kraftwerksasche eingesetzt wird.

3) Verfahren nach den Ansprüchen 1 bis 2, dadurch gekennzeichnet, daß als in Wasser gelöste Abfallstoffe Abfallsäuren eingesetzt werden.

4) Verfahren nach den Ansprüchen 1 bis 3, dadurch gekennzeichnet, daß als Abfallsäure Dünnsäure aus der Titandioxid-Produktion eingesetzt wird.

5) Verfahren nach den Ansprüchen 1 bis 3, dadurch gekennzeichnet, daß als Abfallsäure die bei der Herstellung
   organischer Farbpigmente entstehende Abfallsäure eingesetzt wird.

6) Verfahren nach den Ansprüchen 1 bis 4, dadurch gekennzeichnet, daß die Mischung im Verhältnis von etwa
   100 Gew.-Teilen Braunkohlen-Kraftwerksasche mit etwa 50
   bis 75, vorzugsweise 60 bis 65 Gew.-Teilen Dünnsäure
   eingesetzt wird.

7) Verfahren nach den Ansprüchen 1 bis 2, dadurch gekennzeichnet, daß feste Abfallstoffe mit der Braunkohlen-
Kraftwerksasche vor der Wasserzugabe homogen gemischt
werden.

8) Verfahren nach den Ansprüchen 1 bis 4, dadurch gekennzeichnet, daß Braunkohlen-Kraftwerksasche in einer solchen Menge mit der Dünnsäure vermischt wird, daß die Mischung unter Bindung der in der Dünnsäure enthalte en
Schwermetalle basische Reaktion aufweist.

9) Verfahren nach den Ansprüchen 1 bis 8, dadurch gekennzeichnet, daß die Mischung zum Abdichten von Abfalldeponien eingesetzt wird.

10) Verfahren nach den Ansprüchen 1 bis 8, dadurch gekennzeichnet, daß die Mischung zum Abdämmen von Zuflüssen
von Grund- und/oder Oberflächenwasser im Tiefbau, Wasserbau oder Bergbau eingesetzt wird.

11) Verfahren nach den Ansprüchen 1 bis 8, dadurch gekennzeichnet, daß die Mischung zum Verfüllen von unterirdischen natürlichen oder bergmännisch geschaffenen Hohlräumen eingesetzt wird.

12) Verfahren nach den Ansprüchen 1 bis 11, dadurch gekennzeichnet, daß der Mischung ein solcher Wasseranteil nach
Menge und Zeitpunkt zugefügt wird, daß die erhaltene Mischung für den Transport vor Ort fließfähig ist.

13) Verfahren nach den Ansprüchen 1 bis 12, dadurch gekennzeichnet, daß die Mischung durch mechanische Einwirkung
verdichtet wird.

| Europäisches Patentamt | EUROPÄISCHER RECHERCHENBERICHT | 0050371 Nummer der Anmeldung EP 81 10 8612 |

## EINSCHLÄGIGE DOKUMENTE

| Kategorie | Kennzeichnung des Dokuments mit Angabe. soweit erforderlich. der maßgeblichen Teile | betrifft Anspruch | KLASSIFIKATION DER ANMELDUNG (Int Cl ) |
|---|---|---|---|
| | US - A - 4 226 630 (W. STYRON)<br>  * Spalte 2, Zeile 26 - Spalte 4, Zeile 68 *<br><br>-- | 1,2 | B 09 B   1/00<br>C 04 B 31/00<br>C 02 F 11/00 |
| | LU - A - 80 056 (SOLVAY & CIE.)<br>  * Seite 2, Zeile 11 - Seite 3, Zeile 1; Seite 3, Zeile 25 - Seite 4, Zeile 3 *<br><br>-- | 1,2,9, 12 | |
| | CHEMICAL ABSTRACTS, Band 74, Nr. 6, 8. Februar 1971, Seite 140, Nr. 24844g<br>Columbus, Ohio, U.S.A.<br><br>& DD - A - 72 998 (R. NOWACK et al.) 05-05-1970<br>  * Zusammenfassung *<br><br>-- | 1 | RECHERCHIERTE SACHGEBIETE (Int Cl. ˙)<br><br>B 09 B<br>C 04 B<br>C 02 F<br>A 62 D |
| | US - A - 4 116 705 (C. LEE CHAPPELL)<br>  * Spalte 1, Zeilen 14-18; Spalte 1, Zeile 66 - Spalte 3, letzte Zeile *<br><br>-- | 1-3,9- 11 | |
| | DE - A - 2 456 225 (IU CONVERSION SYSTEMS)<br>  Seite 4, Zeilen 4-22; Seite 13, Zeilen 4-10 *<br><br>-- | 1,2 | KATEGORIE DER GENANNTEN DOKUMENTE<br><br>X: von besonderer Bedeutung allein betrachtet<br>Y: von besonderer Bedeutung in Verbindung mit einer anderen Veröffentlichung derselben Kategorie<br>A: technologischer Hintergrund<br>O: nichtschriftliche Offenbarung<br>P: Zwischenliteratur<br>T: der Erfindung zugrunde liegende Theorien oder Grundsätze |
| | DE - A - 2 724 599 (ULLRICH, KARL, AUGUST)<br>  * Ansprüche 1,3 *<br><br>-- ./. | 11,12 | E: älteres Patentdokument, das jedoch erst am oder nach dem Anmeldedatum veröffentlicht worden ist<br>D: in der Anmeldung angeführtes Dokument<br>L: aus andern Gründen angeführtes Dokument |
| | Der vorliegende Recherchenbericht wurde für alle Patentansprüche erstellt. | | &: Mitglied der gleichen Patentfamilie. übereinstimmendes Dokument |
| Recherchenort<br>Den Haag | Abschlußdatum der Recherche<br>18-01-1982 | Prüfer<br>LAVAL | |

EPA form 1503.1   06.78

Europäisches
Patentamt

**EUROPÄISCHER RECHERCHENBERICHT**

0050371
Nummer der Anmeldung
EP 81 10 8612
-2-

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| AD | DE - B - 2 925 882 (WERNER) | | |
| A | DE - A - 2 130 309 (G. & W.H. COR-SON) | | |
| PX | CHEMICAL ABSTRACTS, Band 95, Nr. 10, 7. September 1981, Seite 301, Nr. 85762j Columbus, Ohio, U.S.A. W. KOERNER et al.: "Solidification of liquid radioactive wastes using lignite ash" | | |
| | & REP.-SAAS - STAATL. AMT ATOM-SICHERH. STRAHLENSCHUTZ DDR, 1981, SAAS-275, | | RECHERCHIERTE SACHGEBIETE (Int. Cl.³) |
| | * Zusammenfassung * | 1 | |
| | ---- | | |